# EUROPÄISCHE PATENTSCHRIFT

(11) **EP 1 685 179 B1**
(45) Veröffentlichungstag und Bekanntmachung des Hinweises auf die Patenterteilung: **04.07.2007**
(21) Anmeldenummer: 04797695.6
(22) Anmeldetag: 06.11.2004
(51) Int. Cl.: C08G 65/00, C08G 65/10, C08G 65/12, C08G 65/26

(54) **VERFAHREN ZUR HERSTELLUNG VON POLYETHERALKOHOLEN**
METHOD FOR PRODUCING POLYETHER ALCOHOLS
PROCEDE DE PRODUCTION D'ALCOOLS DE POLYETHER

(30) Priorität: 13.11.2003 US 712707
(43) Veröffentlichungstag der Anmeldung: 02.08.2006
(73) Patentinhaber: BASF Aktiengesellschaft, 67056 Ludwigshafen (DE)
(72) Erfinder: OSTROWSKI, Thomas, 68199 Mannheim (DE); RUPPEL, Raimund, 01099 Dresden (DE); BAUM, Eva, 01987 Schwarzheide (DE); HARRE, Kathrin, 01109 Dresden (DE)
(86) Internationale Anmeldenummer: PCT/EP2004/012598
(87) Internationale Veröffentlichungsnummer: WO 2005/047365

(56) Entgegenhaltungen:
- EP-A- 0 659 798
- DD-A- 203 734
- DD-A- 203 735
- US-A- 5 777 177
- US-A1- 2002 193 245
- US-B1- 6 359 101
- US-B1- 6 486 361
- US-B1- 6 491 846

## Beschreibung

Die Erfindung betrifft ein Verfahren zur Herstellung von Polyetheralkoholen unter Verwendung von Multimetallcyanidverbindungen als Katalysatoren.

Polyetheralkohole sind wichtige Einsatzstoffe bei der Herstellung von Polyurethanen. Ihre Herstellung erfolgt zumeist durch katalytische Anlagerung von niederen Alkylenoxiden, insbesondere Ethylenoxid und/oder Propylenoxid, an H-funktionelle Starter.

Als Katalysatoren werden zumeist lösliche basische Metallhydroxide oder Salze eingesetzt, wobei Kaliumhydroxid die größte praktische Bedeutung hat. Nachteilig bei der Verwendung von Kaliumhydroxid als Katalysator ist vor allem, dass bei der Herstellung von hochmolekularen Polyetheralkoholen zur Bildung von ungesättigten Nebenprodukten kommt, die die Funktionalität der Polyetheralkohole herabsetzen und sich bei der Herstellung von Polyurethanen sehr nachteilig bemerkbar machen.

Zur Senkung des Gehaltes an ungesättigten Anteilen in den Polyetheralkoholen und zur Erhöhung der Reaktionsgeschwindigkeit bei der Anlagerung von Propylenoxid wird vorgeschlagen, als Katalysatoren Multi-, vorzugsweise Doppelmetallcyanidverbindungen, insbesondere Zinkhexacyanometallate, einzusetzen. Diese Katalysatoren werden häufig auch als DMC-Katalysatoren bezeichnet. Es gibt eine große Zahl von Veröffentlichungen, in denen derartige Verbindungen beschrieben wurden.

Die unter Verwendung von Multimetallcyanidverbindungen hergestellten Polyetheralkohole zeichnen sich durch einen sehr geringen Gehalt an ungesättigten Bestandteilen aus. Ein weiterer Vorteil beim Einsatz von Multimetallcyanidverbindungen als Katalysatoren besteht in der deutlich erhöhten Raum-Zeit-Ausbeute bei der Anlagerung der Alkylenoxide.

Die Herstellung von Polyetherolen mit Hilfe der DMC-Technologie kann sowohl im batchweisen als auch im kontinuierlichen Verfahren erfolgen.

Kontinuierliche Verfahren zur Herstellung von Polyetheralkoholen unter Verwendung von DMC-Katalysatoren sind bekannt. So beschreibt DD 203 735 ein Verfahren zur kontinuierlichen Herstellung von Polyetheralkoholen unter Verwendung von DMC-Katalysatoren, bei dem eine Startsubstanz, die einen aktivierten DMC-Katalysator enthält, kontinuierlich in einen Rohrreaktor dosiert, im Verlaufe des Rohrreaktors ein- oder mehrmals Alkylenoxid zugegeben und am Ende des Reaktors kontinuierlich der fertige Polyetheralkohol entnommen wird. Bei diesem Verfahren muss in einem gesonderten Verfahrensschritt in einem anderen Reaktor die aktivierte Startsubstanz erzeugt werden.

DD 203 734 beschreibt ein Verfahren zur Herstellung von niedermolekularen Alkylenoxid-Anlagerungsprodukten, die einen aktivierten DMC-Katalysator enthalten. Bei diesem Verfahren wird zunächst der Katalysator mit Alkylenoxid aktiviert und nach dem Anspringen der Reaktion so lange Alkylenoxid und niedermolekularer Alkohol in den Reaktor dosiert, bis das gewünschte Molekulargewicht erreicht ist.

In WO 97/29146 wird ein Verfahren zur Herstellung von Polyetheralkoholen unter Verwendung von DMC-Katalysatoren beschrieben, bei dem in einem Reaktor die Anlagerung von Alkylenoxiden an die H-funktionelle Startsubstanz gestartet wird und zu dieser reagierenden Mischung kontinuierlich weitere Startsubstanz und Alkylenoxid dosiert wird. Der fertige Polyetheralkohol wird nach der Anlagerung dem Reaktor entnommen.

In WO 98/03571 wird ein Verfahren zur kontinuierlichen Herstellung von Polyetheralkoholen unter Verwendung von DMC-Katalysatoren beschrieben. Dabei wird einem kontinuierlich arbeitenden Reaktor kontinuierlich Startsubstanz und Alkylenoxid zugeführt und kontinuierlich der fertige Polyetheralkohol entnommen.

In allen Fällen sind der Start der Reaktion und die Herstellung stationärer Bedingungen im Reaktor aufgrund der starken Exothermie der Reaktion schwierig.

Als Startsubstanzen können sowohl Alkohole als auch Alkoxylate von Alkoholen verwendet werden. Bei niedermolekularen Alkoholen, wie Glyzerin, Trimethylolpropan, Propylenglykol, Dipropylenglykol, Ethylenglykol, Diethylenglykol, Sorbitol, Tridekanol-N, kann in der Anfangsphase der Reaktion durch die niedermolekularen Starter eine Vergiftung des Katalysators auftreten. Werden höhermolekulare Starter verwendet, insbesondere mit Molmassen oberhalb 300 g/mol, kann ebenfalls eine Schädigung des Katalysators, insbesondere aufgrund von thermischer Belastung während des Reaktionsstarts, auftreten.

Im Falle der kontinuierlichen Dosierung der niedermolekularen Alkohole in den Reaktor muss eine Vergiftung des Katalysators unterbunden werden. Dies ist insbesondere dann wichtig, wenn mit geringen Mengen an DMC-Katalysator gearbeitet wird.

Aufgabe der Erfindung war es, das Anfahren von kontinuierlichen Reaktoren zur Herstellung von Polyetheralkoholen durch Anlagerung von Alkylenoxiden an H-funktionelle Startsubstanzen so zu gestalten, dass der stationäre Zustand im Reaktor schnell eingestellt werden kann, ohne dass es, auch bei Einsatz geringer Katalysatorkonzentrationen, zu einer Deaktivierung des Katalysators kommt.

Die Aufgabe konnte überraschenderweise dadurch gelöst werden, dass am Reaktionsstart eine Vorlagesubstanz und DMC-Katalysator im Reaktor vorgelegt werden, dazu Alkylenoxid in einer definierten Zeit bis zu der Dosiergeschwindigkeit gefahren wird, die beim kontinuierlichen Betrieb des Reaktors eingehalten wird, nach Erreichen dieser Dosiergeschwindigkeit oder parallel zur Alkylenoxiddosierung Startsubstanz in einer definierten Zeit bis zu der Dosiergeschwindigkeit gefahren wird, die beim kontinuierlichen Betrieb des Reaktors eingehalten wird. Die Dosierung der Alkylenoxide und der Startsubstanz vom Reaktionsstart bis zum Erreichen der Dosiergeschwindigkeit, die für den kontinuierlichen Betrieb des Reaktors eingehalten wird, wird im folgenden auch als Dosierrampe bezeichnet.

Gegenstand der Anmeldung ist demzufolge ein Verfahren zur kontinuierlichen Herstellung von Polyetheralkoholen durch Umsetzung von Alkylenoxiden mit H-funktionellen Startsubstanzen in Gegenwart von DMC-Katalysatoren, dadurch gekennzeichnet, dass zu Beginn des Verfahrens
a) in einem Reaktor zunächst Vorlageprodukt und DMC-Katalysator vorgelegt werden,
b) Alkylenoxide so zudosiert werden, dass die Dosiergeschwindigkeit, die für den kontinuierlichen Betrieb des Reaktors eingehalten wird, in einer Zeit von 100 bis 3000 Sekunden erreicht wird,
c) während oder nach Schritt b) Startsubstanz so zudosiert wird, dass die Dosiergeschwindigkeit, die für den kontinuierlichen Betrieb des Reaktors eingehalten wird, in einer Zeit von 5 bis 500 Sekunden erreicht wird,
d) nach dem Erreichen des für den kontinuierlichen Betrieb des Reaktors gewünschten Füllstands im Reaktor kontinuierlich Produkt aus dem Reaktor abgenommen wird, wobei gleichzeitig Startsubstanz und Alkylenoxide in einer solchen Menge zudosiert werden, dass der Füllstand im Reaktor konstant bleibt und DMC-Katalysator so zudosiert wird, dass die für den kontinuierlichen Betrieb des Reaktors notwendige Katalysatorkonzentration im Reaktor erhalten bleibt.

In einer weiteren Ausführungsform ist es auch möglich, Startsubstanz und Alkylenoxide parallel zu dosieren. In diesem Fall wird für beide Ströme die gleiche relative Dosierrampe verwendet, d.h. das Verhältnis der beiden Dosierströme ist konstant.

Weiterhin ist es auch möglich, die Dosierung der Startsubstanz so zu beginnen, dass vor dem Erreichen der maximalen Dosiergeschwindigkeit der Alkylenoxide bereits Startsubstanz dosiert wird.

Der Betriebszustand des Reaktors im kontinuierlichen Betrieb wird in folgenden auch als stationärer Zustand bezeichnet. Kennzeichnend für den stationären Zustand ist, dass keine zeitliche Änderung der Prozesszielgrößen, wie Druck, Temperatur sowie Produkteigenschaften, mehr auftritt.

Als Vorlageprodukte, die in Schritt a) können inerte Lösungsmittel oder vorzugsweise H-funktionelle Verbindungen eingesetzt werden. Bevorzugt eingesetzte H-funktionelle Verbindungen sind ein- oder mehrfunktionelle Alkohole. Dabei können in einer Ausführungsform des erfindungsgemäßen Verfahrens die in Schritt c) eingesetzten Startsubstanzen verwendet werden. Vorzugsweise eingesetzt werden mehrfunktionelle Umsetzungsprodukte von Alkoholen mit Alkylenoxiden mit einem Molekulargewicht größer 300 g/mol. In einer besonders bevorzugten Ausführungsform des erfindungsgemäßen Verfahrens wird als Vorlageprodukt der Polyetheralkohol eingesetzt, der Endprodukt des Verfahrens ist.

Als Startsubstanzen werden bevorzugt ein- oder mehrfunktionelle Alkohole mit einem Molekulargewicht von 62 bis 400 g/mol eingesetzt. Es kann sich dabei um die gleichen oder um unterschiedliche Verbindungen wie beim Vorlageprodukt handeln. Vorzugsweise werden Glycerin, Sorbitol, Ethylenglykol, Diethylenglykol Propylenglykol, Dipropylenglykol und deren Umsetzungsprodukte mit Alkylenoxiden eingesetzt.

Als Alkylenoxide werden vorzugsweise Propylenoxid, Butylenoxid, Ethylenoxid sowie Mischungen aus mindestens zwei der genannten Alkylenoxide eingesetzt. Besonders bevorzugt werden Propylenoxid oder Mischungen aus Propylenoxid und Ethylenoxid eingesetzt.

Bei Unterschreiten der Zeiten bis zum Erreichen der Dosiergeschwindigkeiten in den Schritten b) und c) kommt es zu einer Schädigung des Katalysators, wahrscheinlich aufgrund der durch die rasche Dosierung bedingten hohen Temperaturen durch spontane Abreaktion des Propylenoxids. Bei einer Überschreitung der Zeiten dauert es lange, bis die Bedingungen im Reaktor so sind, dass das Zielprodukt in einer konstanten Qualität erzeugt wird, so dass in der Startphase nicht-spezifikationsgerechtes Produkt erhalten wird. Der Zeitraum bis zum Erreichen von konstanten Bedingungen im Reaktor wird üblicherweise in der Zahl der für einen stationären Zustand erforderlichen Verweilzeiten angegeben. Die Verweilzeit ist der Quotient aus Reaktionsvolumen (L) und Zulaufgeschwindigkeit (in Us). Die Verweilzeit gibt also die mittlere Aufenthaltsdauer der Moleküle im Reaktor an. Bei nicht-volumenbeständigen Reaktionen wird die Verweilzeit auf die Eingangsbedingungen in den Reaktor bezogen.

Bei der Vorlage von Vorlageprodukt und DMC-Katalysator in Schritt a) wird der Reaktor vorzugsweise bis zu einem Füllstand von 20 bis 80 % gefüllt. Nachdem im Verlaufe der Schritte b) und c) im Reaktor ein Füllstand von 100 % erreicht ist, wird die Ablasseinrichtung geöffnet und der Füllstand im Reaktor konstant gehalten. Die Katalysatorkonzentration wird konstant gehalten, indem DMC-Katalysator, vorzugsweise in Form einer Suspension, insbesondere in einem Polyol, nachdosiert wird.

Nach dem Erreichen der für den stationären Betrieb gewählten Dosiergeschwindigkeiten des Alkylenoxids und der Startsubstanz werden diese üblicherweise nicht mehr verändert. Durch das Verhältnis der beiden Dosiergeschwindigkeiten von Starter und Alkylenoxid wird die Molmasse des fertigen Polyetherols bestimmt. Eine Änderung dieses Verhältnisses während des stationären Zustands im Reaktor kann zu variierenden Produkteigenschaften führen. Eine gleichzeitige Erhöhung beider Dosiergeschwindigkeiten, bei konstantem Verhältnis der beiden Ströme, ist prinzipiell möglich.

Da mit dem Ablassen von Polyetheralkohol aus dem Reaktor auch Katalysator ausgetragen wird, muss dieser ersetzt werden. Dies erfolgt, indem parallel zum zudosierten Starter und dem Alkylenoxid Katalysator zugesetzt wird. Dabei kann der Katalysator kontinuierlich oder portionsweise zugesetzt werden. Der Katalysator kann in fester Form oder in das in Schritt a) eingesetzte Vorlageprodukt dispergiert zugesetzt werden. Weiterhin bietet es sich an, den Katalysator im Endprodukt zu dispergieren. Aufgrund der differentiellen Katalyse, die bei der DMC-katalysierten Polyolherstellung beobachtet wird, wird eine enge Molmassenverteilung im Endprodukt erreicht. Prinzipiell kann der Katalysator in einem beliebigen H-aciden oder inerten Lösungsmittel dispergiert zugesetzt werden. Somit ist es möglich, den Katalysator in einem beliebigen Propoxylat, welches eine kleinere Molmasse als die Zielmolmasse aufweist, zu dispergieren, sofern die gleiche Starterfunktionalität gegeben ist; es können daher Masterbatch-Katalysatorsuspensionen verwendet werden, mit denen eine Vielzahl von verschiedenen Produkten synthetisiert werden können. Für typische Weichschaumanwendungen würde sich demnach die Verwendung eines Glyzerin-Propoxylats mit einer Molmasse von 1000 g/mol anbieten. Für die Herstellung von Diolen würde man demnach den Katalysator zum Beispiel in einem Propoxylat von Dipropylenglykol mit einer Molmasse von 1000 g/mol dispergieren. Weiterhin ist es möglich, den Strom des zugeführten Katalysators zu splitten. Dabei wird jeder Teilstrom zu Anfang wie in Punkt c) beschrieben dosiert. In einer besonderen Ausgestaltung dieser Ausführungsform enthalten nicht alle Teilströme der Startsubstanz, in einer bevorzugten Ausgestaltung nur ein Teilstrom der Startsubstanz Katalysator. Diese Ausführungsform ist insbesondere dann von Vorteil, wenn lediglich ein Molmassenaufbau erzielt werden soll, ohne die gleichzeitige Zugabe von niedermolekularen Startern. Bei der Dosierung des Katalysators in den Reaktor ist es nicht erforderlich, diesen vorher zu aktivieren. Die Aktivierung erfolgt unter den Bedingungen des stationären Betriebs in situ im Reaktor.

Die Konzentration DMC-Katalysators liegt zu Beginn der Umsetzung zumeist im Bereich zwischen 50 und 500 ppm. Während des stationären Zustands im Reaktor sollte die Katalysatorkonzentration im Reaktor so geregelt werden, dass der Gehalt an freiem Alkylenoxid im Reaktor unter 10 Gew.-%, bezogen auf den Inhalt des Reaktors, beträgt. Bei einem Überschreiten dieser Menge kann es zu einem verstärkten Auftreten von Nebenreaktionen kommen. Diese äußern sich insbesondere in einem erhöhten Gehalt an sehr hochmolekularen Anteilen im Polyetheralkohol und in einer erhöhten Viskosität. Diese hochmolekularen Anteile führen zu einer drastischen Verschlechterung der Verarbeitungseigenschaften der Polyetheralkohole bei der Herstellung von Schaumstoffen, bis hin zur völligen Unbrauchbarkeit. Bei einem zu hohen Gehalt an Katalysator im System steigen die Produktionskosten.

Wie bereits oben beschrieben, ist der Katalysator in einer bevorzugten Ausführungsform der Erfindung im Endprodukt suspendiert. Die Menge an mit dem Katalysator oder separat zudosiertem Endprodukt kann frei gewählt werden. So ist es beispielsweise möglich, die reagierende Mischung, bestehend aus Alkylenoxid, DMC-Katalysator und Starter, beliebig mit Endprodukt, welches sich in der vorliegenden Reaktion aufgrund des Vorliegens der differentiellen Katalyse inert verhält, zu verdünnen. Ein hoher Verdünnungsgrad führt allerdings zur Verringerung der Raum-Zeit-Ausbeute, da letztlich Produkt lediglich im Kreis gefahren wird. Die Raum-Zeit-Ausbeute ist definiert als produzierte Masse pro Zeit bezogen auf das Reaktorvolumen.

In einer bevorzugten Ausführungsform des erfindungsgemäßen Verfahrens wird der Starter vor der Dosierung in den Reaktor auf Temperaturen zwischen 50 und 130°C erwärmt, vorzugsweise auf die Reaktionstemperatur Diese Erwärmung ist um so vorteilhafter, je geringer die Homogenisierung des Reaktionsgemisches im Reaktor ist und je größer der Reaktor ausgelegt ist. Besonders vorteilhaft ist die Erwärmung des Starters bei der Verwendung von Glycerin, Sorbitol, Diethylenglykol und Dipropylenglykol als Startsubstanzen. Bei dieser Ausführungsform des erfindungsgemäßen Verfahrens wird die Ausbildung von primären Hydroxylgruppen am Kettenende, die für viele Anwendungsgebiete der Polyetheralkohole, insbesondere der Herstellung von Blockschaumstoffen, unerwünscht ist, unterdrückt. Außerdem wird die Desaktivierung des Katalysators unterdrückt.

Als Reaktor können die üblichen und bekannten kontinuierlich betriebenen Reaktoren eingesetzt werden. Dies sind insbesondere Strömungsreaktoren, wie Loop-Venturi-Reaktoren, wie sie beispielsweise in EP 419 419 beschrieben sind, oder Strömungsreaktoren mit innenliegendem Wärmetauscher, wie sie in WO 01/62826 beschrieben sind. Weiterhin können Jet-Loop Reaktoren mit internen oder externen Wärmetauschern, wie in PCT/EP01/02033 beschrieben, verwendet werden.

Insbesondere zum Einsatz kommen kontinuierlich betriebene Rührkessel, wie sie beispielsweise in WO 01/62825 beschrieben sind. Der Zulauf und der Ablauf der Produkte sind bei dieser Ausführungsform vorzugsweise über Pumpen geregelt.

Die zur Herstellung der erfindungsgemäß eingesetzten Polyetheralkohole verwendeten Multimetallcyanidverbindungen sind bekannt. Sie haben zumeist die allgemeine Formel (1)

M¹ₐ[M²(CN)_{b}(A)_{c}]_{d} · fM¹gXₙ · h(H2O) · eL, (I)

wobei
- M¹: ein Metallion, ausgewählt aus der Gruppe, enthaltend Zn²⁺, Fe²⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺, Hg²⁺, Pd²⁺, Pt²⁺, V²⁺, Mg²⁺, Ca²+, Ba²⁺, Cu²⁺,
- M²: ein Metallion, ausgewählt aus der Gruppe, enthaltend Fe²⁺ , Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺
bedeuten und M¹ und M² gleich oder verschieden sind,
- A: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- X: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: ein mit Wasser mischbarer Ligand, ausgewählt aus der Gruppe, enthaltend Alkohole Aldehyde, Ketone, Ether, Polyether Ester, Harnstoffe, Amide, Nitrile, Lactone, Lactame und Sulfide,
bedeuten, sowie
- a, b, c, d, g und n: so ausgewählt sind, daß die Elektroneutralität der Verbindung gewährleistet ist, und
- e: die Koordinationszahl des Liganden oder 0 bedeutet,
- f: eine gebrochene oder ganze Zahl größer oder gleich 0 bedeutet, sowie
- h: eine gebrochene oder ganze Zahl größer oder gleich 0 bedeutet.

Die Herstellung dieser Verbindungen erfolgt nach allgemein bekannten Verfahren, indem man die wässrige Lösung eines wasserlöslichen Metallsalzes mit der wässrigen Lösung einer Hexacyanometallatverbindung, insbesondere eines Salzes oder einer Säure, im folgenden auch als Eduktlösungen bezeichnet, vereinigt und gegebenenfalls dazu während oder nach der Vereinigung einen wasserlöslichen Liganden gibt. Solche Katalysatoren sowie ihre Herstellung werden beispielsweise in EP 862,947 und DE 197,42,978 beschrieben.

Besonders vorteilhaft für den Einsatz als Katalysatoren sind Multimetallcyanidverbindungen, bei deren Herstellung als Cyanmometallatverbindung die entsprechenden Säuren eingesetzt werden.

Die Multimetallcyanidverbindungen haben vorzugsweise einen kristallinen Aufbau. Ihre Partikelgröße liegt vorzugsweise im Bereich zwischen 0,1 und 100 µm. Ein besonderer Vorteil der kristallinen DMC-Katalysatoren, insbesondere von solchen, die unter Verwendung von Cyanometallatsäuren hergestellt wurden, besteht in ihrer höheren katalytischen Aktivität. Dadurch kann die Herstellung der Polyetheralkohole mit einer geringeren Menge an Katalysator durchgeführt werden. Die in diesem Fall eingesetzte Menge entspricht zumeist der Menge an Multimetallcyanidverbindungen im fertigen Polyetheralkohol. Auf die aufwendige Abtrennung der Multimetallcyanidverbindungen aus dem Polyetheralkohol nach der Herstellung kann somit verzichtet werden. Es ist jedoch auch möglich, eine größere Menge an Multimetallcyanidverbindungen einzusetzen und nach der Synthese des Polyetheralkohols die Menge der Multimetallcyanidverbindung im Polyol so weit abzureichern, dass der Polyetheralkohol die für die Eiterverarbeitung gewünschte Menge an Multimetallcyanidverbindungen enthält.

Die Multimetallcyanidverbindungen werden vorzugsweise in Form von Suspensionen eingesetzt, wobei die Multimetallcyanidverbindungen in organischen Verbindungen, vorzugsweise Alkoholen, suspendiert werden. Für das erfindungsgemäße Verfahren bietet es sich an, den Katalysator entweder in einem Zwischenprodukt oder im Endprodukt der Synthese zu dispergieren. Die Katalysatorsuspension sollte Konzentrationen zwischen 0,5 und 10 % aufweisen.

Die Herstellung der Polyetheralkohole erfolgt, wie ausgeführt, indem man Alkylenoxide unter Verwendung der beschriebenen Katalysatoren an H-funktionelle Startsubstanzen anlagert.

Als niedermolekulare Startsubstanzen kommen H-funktionelle Verbindungen zum Einsatz. Insbesondere werden Alkohole mit einer Funktionalität von 1 bis 8, vorzugsweise 2 bis 8, eingesetzt. Zur Herstellung von Polyetheralkoholen, die für Polyurethan-Weichschaumstoffe eingesetzt werden, kommen als Startsubstanzen insbesondere Alkohole mit einer Funktionalität von 2 bis 4, insbesondere von 2 und 3, zum Einsatz.

Beispiele sind Ethylenglykol, Propylenglykol, Glyzerin, Trimethylolpropan, Pentaerythrit. Bei der Anlagerung der Alkylenoxide mittels DMC-Katalysatoren ist es vorteilhaft, zusammen mit oder an Stelle von den genannten Alkoholen deren Umsetzungsprodukte mit Alkylenoxiden, insbesondere Propylenoxid, einzusetzen. Derartige Verbindungen haben vorzugsweise eine Molmasse bis 500 g/mol. Die Anlagerung der Alkylenoxide bei der Herstellung dieser Umsetzungsprodukte kann mit beliebigen Katalysatoren erfolgen, beispielsweise mit basischen oder Lewis-sauren Katalysatoren; basische Katalysatoren werden nach der Synthese mit geeigneten Methoden (z.B. Kristallisation oder Adsorption) abgetrennt. Die Polyetheralkohole für die Herstellung von Polyurethan-Weichschaumstoffen haben zumeist eine Hydroxylzahl im Bereich zwischen 20 und 100 mgKOH/g.

Die Anlagerung der Alkylenoxide bei der Herstellung der für das erfindungsgemäße Verfahren eingesetzten Polyetheralkohole kann nach den bekannten Verfahren erfolgen. So ist es möglich, dass die Polyetheralkohole nur ein Alkylenoxid enthalten. Bei Verwendung von mehreren Alkylenoxiden ist eine sogenannte blockweise Anlagerung, bei der die Alkylenoxide einzeln nacheinander angelagert werden, oder eine sogenannte statistische Anlagerung, bei der die Alkylenoxide gemeinsam zudosiert werden, möglich. Es ist auch möglich, bei der Herstellung der Polyetheralkohole sowohl blockweise als auch statistische Abschnitte in die Polyetherkette einzubauen.

Vorzugsweise werden zur Herstellung von Polyurethan-Blockweichschaumstoffen Polyetheralkohole mit einem hohen Gehalt an sekundären Hydroxylgruppen und einem Gehalt an Ethylenoxideinheiten in der Polyetherkette von maximal 30 Gew.-%, bezogen auf das Gewicht des Polyetheralkohols, verwendet. Vorzugsweise haben diese Polyetheralkohole am Kettenende einen Propylenoxidblock. Für die Herstellung von Polyurethan-Formweichschaumstoffen werden insbesondere Polyetheralkohole mit einem hohen Gehalt an primären Hydroxylgruppen und einem Ethylenoxid-Endblock in einer Menge von < 20 Gew.-%, bezogen auf das Gewicht des Polyetheralkohols, verwendet.

Die Anlagerung der Alkylenoxide erfolgt bei den hierfür üblichen Bedingungen, bei Temperaturen im Bereich von 60 bis 180°C, bevorzugt zwischen 90 bis 150°C, insbesondere zwischen 100 bis 140°C und Drücken im Bereich von 0 bis 20 bar, bevorzugt im Bereich von 0 bis 10 bar und insbesondere im Bereich von 0 bis 5 bar. Die Mischung aus Startsubstanz/Dispergierungspolyol und DMC-Katalysator kann vor Beginn der Alkoxylierung gemäß der Lehre von WO 98/52689 durch Strippen vorbehandelt werden.

Nach Beendigung der Anlagerung der Alkylenoxide wird der Polyetheralkohol nach üblichen Verfahren aufgearbeitet, indem die nicht umgesetzten Alkylenoxide sowie leicht flüchtige Bestandteile entfernt werden, üblicherweise durch Destillation, Wasserdampf- oder Gasstrippen und/oder anderen Methoden der Desodorierung. Falls erforderlich, kann auch eine Filtration erfolgen.

Der DMC-Katalysator kann im Polyetheralkohol verbleiben. Bei Einsatz einer zu hohen Menge an DMC-Katalysator bei der Herstellung der Polyetheralkohole kann der überschüssige Anteil nach der Umsetzung aus dem Polyetheralkohol entfernt werden. Hierfür sind die üblichen und bekannten Methoden der Reinigung der Polyetheralkohole geeignet, beispielsweise die Filtration, die als Tiefenfiltration oder mittels einer Membran durchgeführt werden kann, oder die Sedimentation, beispielsweise mittels Zentrifugieren.

Die so hergestellten Polyetheralkohole werden, wie beschrieben, vorzugsweise als Ausgangsstoffe für die Herstellung von Polyurethan-Weichschaumstoffen eingesetzt.

Die Erfindung soll an den nachstehenden Beispielen näher erläutert werden.

### Beispiel 1.1 (Vergleich)

Es wurde ein mit einem Ankerrührer ausgerüsteter Reaktor mit einem Gesamtinhalt von 1,3 Litern verwendet, der mit einer Mantelkühlung ausgestattet war. Die Temperatur wurde über einen Temperwasserkreislauf geregelt, wobei die Reaktortemperatur am Reaktorboden gemessen wurde. Zur Dosierung von Alkylenoxiden, Starter und DMC-Suspension wurden HPLC-Pumpen eingesetzt. Zur Messung der Konzentration an freiem Propylenoxid wurde eine IR-ATR-Sonde der Firma Mettler-Toledo (ReactIR) eingesetzt, welche zuvor auf das vorliegende System kalibriert wurde. Die absoluten Abweichungen in der Bestimmung der Konzentration an freiem Propylenoxid lagen bei ca. ±1 %.

Zunächst wurden 500 g eines Propoxylats von Dipropylenglykol mit einer mittleren Molmasse von 1000 g/mol vorgelegt, in dem 200 ppm DMC Katalysator, gemäß der Lehre von Patent EP 862 947, hergestellt als feuchter Filterkuchen mit anschließender Trocknung bei 100°C und 13 mbar bis zur Massenkonstanz, dispergiert wurden. Der Reaktor wurde auf eine Temperatur von 115°C erwärmt, gleichzeitig wurde der Rührer eingeschaltet, wobei die Drehzahl so gewählt wurde, dass während der gesamten Reaktionsdauer ein Energieeintrag von 2,0 kW/m³ erreicht wurde. Anschließend wurden gleichzeitig Propylenoxid, weiteres Propoxylat von Dipropylenglykol, welches eine Molmasse von 1000 g/mol besaß und hier als Starter fungierte, sowie DMC-Katalysatorsuspension (DMC-Konzentration: 5000 ppm in einem Propoxylat mit der Molmasse 1000 g/mol) dosiert. Die Dosiergeschwindigkeit des Propylenoxids wurde innerhalb von 5 s von 0 auf 7,5 g/min gesteigert; die Dosiergeschwindigkeit des Propoxylats von Dipropylenglykol wurde von 0 auf 2,3 g/min innerhalb von 5 und die der Katalysatorsuspension von 0 auf 0,2 g/min innerhalb von 5 s gesteigert. Nachdem im Reaktor 1000 g Produkt enthalten waren, die Kontrolle erfolgte über die Waagensignale der zudosierten Edukte, wurde das Produktablassventil geöffnet und kontrolliert ein Strom von 10 g/min entnommen. Die mittlere Verweilzeit in dem Reaktorsystem lag demnach bei (1000 mL/10 mL/min) = 100 min bei Annahme einer Dichte der Reaktionsmischung von 1 g/mL.
Bei diesem Beispiel wurde ein Molmassenaufbau von 1000 auf 4000 g/mol realisiert. Es konnte beobachtet werden, dass während der Reaktion starke Temperaturspitzen bis 150°C auftraten, ebenso starke Regelschwankungen. Im Reaktor wurden Konzentrationen an freiem Propylenoxid bis 25 % erreicht.

Dem Produktstrom wurden Proben alle 100 Minuten über eine Dauer von 2500 min (= 41 h) entnommen. Die mittlere OH-Zahl der Produkte lag bei 28,84 mg KOH/g, was einem Molgewicht von ca. 4000 g/mol entspricht. Nach 20 Verweilzeiten (d.h. 33 h) war die Produktviskosität weitgehend konstant und lag zwischen 813 und 835 mPas bei 25°C.

Als Ursache für die hohe Viskosität können Schädigungen des Katalysators aufgrund der Temperaturspitzen sowie die schwierige Regelung des Systems angenommen werden. Da die unruhige Reaktion auch nach 20 Verweilzeiten noch auftrat, fand eine permanente Schädigung auch des frisch dosierten Katalysators statt, vermutlich wegen der Temperaturschwankungen.

### Beispiel 1.2 (Vergleich)

Es wurde verfahren wie in Beispiel 1.1, jedoch betrug die Zeit bis zum Erreichen der Dosiergeschwindigkeit bei Propylenoxid, Propoxylat von Dipropylenglykol und Katalysator jeweils 7200 Sekunden.
Die maximale Temperatur lag bei 116°C.
Die Konzentration an freiem Propylenoxid im Reaktor war kleiner als 1 %, bestimmt mittels ATR-IR-Messungen.
Dem Produktstrom wurden alle 100 Minuten über eine Dauer von 2500 Minuten Proben entnommen. Die mittlere OH-Zahl der Produkte lag nach 22 Verweilzeiten bei 28,21 mg KOH/g, was einem Molgewicht von ca. 4000 g/mol entspricht. Die Proben, die nach mehr als 18 Verweilzeiten gezogen wurden, besaßen eine weitgehend konstante Produktviskosität von ca. 820 ± 7 mPas bei 25°C.
Als Ursache für die lange Zeit, bis ein stationärer Zustand erreicht wurde, kann die zu langsame Aktivierung des Anfangs vorliegenden des Katalysators angenommen werden. Dadurch dauerte es lange, bis die erforderliche Aktivität erreicht wurde.

### Beispiel 1.3 (erfindungsgemäß)

Es wurde verfahren wie in Beispiel 1.1, jedoch betrug die Zeit bis zum Erreichen der Dosiergeschwindigkeit bei Propylenoxid, Propoxylat von Dipropylenglykol und Katalysator jeweils 600 Sekunden.
Dem Produktstrom wurden alle 10 Minuten über eine Dauer von 1000 Minuten Proben entnommen. Die mittlere OH-Zahl der Produkte lag nach 10 Verweilzeiten bei 28,95 mg KOH/g, was einem Molgewicht von ca. 4000 g/mol entspricht. Nach 5 Verweilzeiten war die Produktviskosität weitgehend konstant und lag bei 818 ± 8 mPas bei 25 °C.

Dieses Beispiel zeigt, dass bei erfindungsgemäßer Dosierrampe der stationäre Zustand schnell erreicht wird (nach 500 Minuten), so dass sich ein wirtschaftlicher Betrieb erreichen lässt.

### Beispiel 1.4 (Vergleich)

Es wurde ein Reaktor wie in Beispiel 1.1 verwendet, welcher zusätzlich über eine Dosierung von monomerem Dipropylenglykol mittels HPLC-Pumpen verfügte. Es wurden 500 g eines Propoxylats von Dipropylenglykol mit einer mittleren Molmasse von 2000 g/mol vorgelegt, in die 300 ppm DMC-Katalysator dispergiert wurde. Der Katalysator wurde gemäß der Lehre von EP 862 947 hergestellt. Nach der Temperierung auf 115°C und der Einstellung der Rührerleistung auf einen Wert von 2,0 kW/m³ wurden gleichzeitig Propylenoxid (Dosierung: 0 auf 4,67 g/min in 5 s), Dipropylenglykol (Dosierung: 0 auf 0,33 g/min in 5 s), Propoxylat von Dipropylenglykol mit einer Molmasse von 2000 g/mol (Dosierung: 0 auf 4,7 g/min in 5 s) sowie DMC-Suspension (Konzentration: 5000 ppm, dispergiert in einem Propoxylat von Dipropylenglykol mit einer Molmasse von 2000 g/mol, Dosierung: 0 auf 0,3 g/min in 5 s) dosiert. Nachdem 1000 g Reaktionsgemisch im Reaktor vorhanden waren, wurde das Ablassventil geöffnet und es wurde Produkt mit 10 g/min entnommen.

Es wurde eine unruhige Reaktion beobachtet, die mit starken Temperaturstößen und zeitweiligem Einschlafen der Reaktion verbunden war. Es wurde kein stationärer Zustand erreicht.

Dem Produktstrom wurden alle 100 Minuten bis zu einer Reaktionsdauer von 3000 Minuten Proben entnommen. Die mittlere OH-Zahl der Produkte lag bei 56,4 mg KOH/g, was einem Molgewicht von ca. 2000 g/mol entspricht. Nach 25 Verweilzeiten war die Produktviskosität weitgehend konstant und lag zwischen 324 und 344 mPas bei 25°C).

### Beispiel 1.5 (Vergleich)

Es wurde verfahren wie in Beispiel 1.5, jedoch betrug die Zeit bis zum Erreichen der Dosiergeschwindigkeit bei Propylenoxid, Dipropylenglykol, Propoxylat von Dipropylenglykol und Katalysator jeweils 8000 Sekunden.

Dem Produktstrom wurden alle 100 Minuten bis zu einer Reaktionsdauer von 2500 Minuten Proben entnommen. Die mittlere OH-Zahl der Produkte lag nach 24 Verweilzeiten bei 55,2 mg KOH/g. Nach 23 Verweilzeiten war die Produktviskosität weitgehend konstant und lag bei 333 ±11 mPas bei 25°C.

### Beispiel 1.6 (Erfindungsgemäß)

Es wurde verfahren wie in Beispiel 1.5, jedoch betrug die Zeit bis zum Erreichen der Dosiergeschwindigkeit bei Propylenoxid, Dipropylenglykol, Propoxylat von Dipropylenglykol und Katalysator jeweils 400 Sekunden.

Dem Produktstrom wurden Proben bis hin zu einer Reaktionsdauer von 1500 Minuten entnommen. Die mittlere OH-Zahl der Produkte lag nach 10 Verweilzeiten bei 54,8 mg KOH/g. Nach 6 Verweilzeiten war die Produktviskosität weitgehend konstant und lag bei 331 ± 8 mPas bei 25°C.

## Patentansprüche

1. Verfahren zur kontinuierlichen Herstellung von Polyetheralkoholen durch Umsetzung von Alkylenoxiden mit H-funktionellen Startsubstanzen in Gegenwart von DMC-Katalysatoren, **dadurch gekennzeichnet, dass** zu Beginn des Verfahrens
a) in einem Reaktor zunächst Vorlageprodukt und DMC-Katalysator vorgelegt werden,
b) Alkylenoxid so zudosiert wird, dass die Dosiergeschwindigkeit, die für den kontinuierlichen Betrieb des Reaktors eingehalten wird, in einer Zeit von 100 bis 3000 Sekunden erreicht wird,
c) während oder nach Schritt b) Startsubstanz so zudosiert wird, dass die Dosiergeschwindigkeit, die für den kontinuierlichen Betrieb des Reaktors eingehalten wird, in einer Zeit von 5 bis 500 Sekunden erreicht wird,
d) nach dem Erreichen des für den kontinuierlichen Betrieb des Reaktors gewünschten Füllstands im Reaktor kontinuierlich Produkt aus dem Reaktor abgenommen wird, wobei gleichzeitig Startsubstanz und Alkylenoxide in einer solchen Menge zudosiert werden, dass der Füllstand im Reaktor konstant bleibt und DMC-Katalysator so zudosiert wird, dass die für den kontinuierlichen Betrieb des Reaktors notwendige Katalysatorkonzentration im Reaktor erhalten bleibt.

2. Verfahren nach Anspruch 1, **dadurch gekennzeichnet, dass** als Vorlageprodukt inerte Lösungsmittel oder H-funktionelle Verbindungen eingesetzt werden.

3. Verfahren nach Anspruch 1, **dadurch gekennzeichnet, dass** als Vorlageprodukt ein- oder mehrfunktionelle Alkohole eingesetzt werden.

4. Verfahren nach Anspruch 1, **dadurch gekennzeichnet, dass** als Vorlageprodukt mehrfunktionelle Umsetzungsprodukte von Alkholen mit Alkylenoxiden mit einem Molekulargewicht größer 300 g/mol eingesetzt werden.

5. Verfahren nach Anspruch 1, **dadurch gekennzeichnet, dass** als Vorlageprodukt der Polyetheralkohol eingesetzt, der Endprodukt des Verfahrens ist, eingesetzt wird.

6. Verfahren nach Anspruch 1, **dadurch gekennzeichnet, dass** als Startsubstanz ein- oder mehrfunktionelle Alkohole mit einem Molekulargewicht von 62 bis 400 g/mol eingesetzt werden.

7. Verfahren nach Anspruch 1, **dadurch gekennzeichnet, dass** als Alkylenoxide Propylenoxid, Butylenoxid, Ethylenoxid sowie Mischungen aus mindestens zwei der genannten Alkylenoxide eingesetzt werden.

8. Verfahren nach Anspruch 1, **dadurch gekennzeichnet, dass** als Alkylenoxide Propylenoxid oder Mischungen aus Propylenoxid und Ethylenoxid eingesetzt werde.

9. Verfahren nach Anspruch 1, **dadurch gekennzeichnet, dass** der niedermolekulare Starter vor der Dosierung in den Reaktor auf Temperaturen zwischen 50 und 130°C erwärmt wird.

10. Verfahren nach Anspruch 1, **dadurch gekennzeichnet, dass** der Reaktor in Schritt a) bis zu einem Füllstand von 20 bis 80 % gefüllt wird.

11. Verfahren nach Anspruch 1, **dadurch gekennzeichnet, dass** die Konzentration des DMC-Katalysators zu Beginn der Umsetzung im Bereich zwischen 50 und 500 ppm liegt.

## Claims

1. A process for the continuous preparation of polyether alcohols by reaction of alkylene oxides with H-functional starter substances in the presence of DMC catalysts, which comprises, at the beginning of the process
a) firstly placing initial charge material and DMC catalyst in a reactor,
b) metering in alkylene oxide so that the metering rate which is maintained for continuous operation of the reactor is reached in a time of from 100 to 3 000 seconds,
c) metering in starter substance during or after step b) so that the metering rate which is maintained for continuous operation of the reactor is reached in a time of from 5 to 500 seconds,
d) after the fill level in the reactor which is desired for continuous operation of the reactor has been reached, taking product off continuously from the reactor while at the same time metering in starter substance and alkylene oxides in such an amount that the fill level in the reactor remains constant and metering in DMC catalyst so that the catalyst concentration necessary for continuous operation of the reactor is maintained in the reactor.

2. The process according to claim 1, wherein inert solvents or H-functional compounds are used as initial charge material.

3. The process according to claim 1, wherein monofunctional or polyfunctional alcohols are used as initial charge material.

4. The process according to claim 1, wherein polyfunctional reaction products of alcohols with alkylene oxides having a molecular weight of greater than 300 g/mol are used as initial charge material.

5. The process according to claim 1, wherein the polyether alcohol which is the end product of the process is used as initial charge material.

6. The process according to claim 1, wherein monofunctional or polyfunctional alcohols having a molecular weight of from 62 to 400 g/mol are used as starter substance.

7. The process according to claim 1, wherein propylene oxide, butylene oxide, ethylene oxide or a mixture of at least two of the alkylene oxides mentioned is used as alkylene oxide.

8. The process according to claim 1, wherein propylene oxide or a mixture of propylene oxide and ethylene oxide is used as alkylene oxide.

9. The process according to claim 1, wherein the low molecular weight starter is heated to from 50 to 130°C before being metered into the reactor.

10. The process according to claim 1, wherein the reactor is filled to a fill level of from 20 to 80% in step a).

11. The process according to claim 1; wherein the concentration of the DMC catalyst at the beginning of the reaction is in the range from 50 to 500 ppm.

## Revendications

1. Procédé de préparation en continu de polyéther-alcools par réaction d'oxydes d'alkylène avec des substances de départ à fonction H en présence de catalyseurs DMC, **caractérisé en ce que**, au début du procédé,
a) on introduit dans un réacteur tout d'abord un produit initial et du catalyseur DMC,
b) on dose de l'oxyde d'alkylène de façon que la vitesse de dosage, qui est maintenue pour la mise en service continue du réacteur, soit atteinte en un temps de 100 à 3000 secondes,
c) pendant ou après l'étape b), on dose la substance de départ de façon que la vitesse de dosage, qui est maintenue pour la mise en service continue du réacteur, soit atteinte en un temps de 5 à 500 secondes,
d) après avoir atteint le niveau de remplissage souhaité du réacteur pour la mise en service continue du réacteur, on retire en continu du produit hors du réacteur, de la substance de départ et des oxydes d'alkylène étant simultanément dosés en une quantité telle que le niveau de remplissage du réacteur reste constant, et on dose du catalyseur DMC de façon que la concentration en catalyseur nécessaire pour la mise en service continue du réacteur soit maintenue dans le réacteur.

2. Procédé suivant la revendication 1, **caractérisé en ce que**, comme produit initial, on introduit des solvants inertes ou des composés à fonction H.

3. Procédé suivant la revendication 1, **caractérisé en ce que**, comme produit initial, on introduit des alcools monofonctionnels ou polyfonctionnels.

4. Procédé suivant la revendication 1, **caractérisé en ce que**, comme produit initial, on introduit des produits réactionnels polyfonctionnels d'alcools avec des oxydes d'alkylène présentant un poids moléculaire supérieur à 300 g/mole.

5. Procédé suivant la revendication 1, **caractérisé en ce que**, comme produit initial, on introduit le polyéther-alcool qui est le produit final du procédé.

6. Procédé suivant la revendication 1, **caractérisé en ce que**, comme substance de départ, on met en oeuvre des alcools monofonctionnels ou polyfonctionnels présentant un poids moléculaire de 62 à 400 g/mole.

7. Procédé suivant la revendication 1, **caractérisé en ce que**, comme oxydes d'alkylène, on met en oeuvre de l'oxyde de propylène, de l'oxyde de butylène, de l'oxyde d'éthylène ainsi que des mélanges d'au moins deux des oxydes d'alkylène cités.

8. Procédé suivant la revendication 1, **caractérisé en ce que**, comme oxydes d'alkylène, on met en oeuvre de l'oxyde de propylène ou des mélanges d'oxyde de propylène et d'oxyde d'éthylène.

9. Procédé suivant la revendication 1, **caractérisé en ce que** l'amorceur de faible poids moléculaire est, avant le dosage dans le réacteur, chauffé à des températures comprises entre 50 et 130°C.

10. Procédé suivant la revendication 1, **caractérisé en ce que** le réacteur est, dans l'étape a), chargé jusqu'à un niveau de remplissage de 20 à 80 %.

11. Procédé suivant la revendication 1, **caractérisé en ce que** la concentration du catalyseur DMC au commencement de la réaction est d'un ordre compris entre 50 et 500 ppm.
